Europäisches Patentamt

European Patent Office

Office européen des brevets

(19)

(11) Veröffentlichungsnummer: **0 190 994 B1**

(12) **EUROPÄISCHE PATENTSCHRIFT**

(45) Veröffentlichungstag der Patentschrift: **29.01.92**

(21) Anmeldenummer: **86810051.2**

(22) Anmeldetag: **29.01.86**

(51) Int. Cl.⁵: **C07C 221/00**, C07C 225/36

(54) **Verfahren zur Herstellung von 1-Amino-2-brom-4-hydroxyanthrachinon.**

(30) Priorität: **04.02.85 CH 492/85**

(43) Veröffentlichungstag der Anmeldung:
**13.08.86 Patentblatt 86/33**

(45) Bekanntmachung des Hinweises auf die
Patenterteilung:
**29.01.92 Patentblatt 92/05**

(84) Benannte Vertragsstaaten:
**BE CH DE FR GB LI**

(56) Entgegenhaltungen:
**EP-A- 0 166 684**
**DE-A- 2 817 890**
**FR-A- 2 385 684**
**US-A- 2 604 480**

(73) Patentinhaber: **CIBA-GEIGY AG**
**Klybeckstrasse 141**
**CH-4002 Basel(CH)**

(72) Erfinder: **Müller, Rolf**
**Herrenweg 77**
**CH-4147 Aesch(CH)**
Erfinder: **Niederer, Hans**
**Tiefengrabenstrasse 3**
**CH-4102 Binningen(CH)**
Erfinder: **Hahn, Othmar**
**Hebelstrasse 77/2**
**CH-4056 Basel(CH)**

EP 0 190 994 B1

# Beschreibung

Die Erfindung betrifft ein Verfahren zur Herstellung von 1-Amino-2-brom-4-hydroxyanthrachinon durch Bromieren von 1-Aminoanthrachinon in 2,4-Stellung und anschliessende Hydrolyse.

1-Amino-2-brom-4-hydroxyanthrachinon ist ein wichtiges Farbstoffzwischenprodukt. Die Verbindung kann auf verschiedenen Wegen hergestellt werden, z.B. ausgehend von 1-Amino-2,4-dibromanthrachinon und Austausch des para-ständigen Halogens gegen die Hydroxygruppe durch Hydrolyse in Schwefelsäure in Gegenwart von Borsäure, oder durch Bromieren von 1-Amino-4-hydroxyanthrachinon, wobei durch sorgfältiges Einhalten der Reaktionsbedingungen ein Bromieren anderer Positionen im Anthrachinongerüst, als in 2-Stellung vermieden werden muss - eine Uebersicht findet sich z.B. im Houben-Weyl Bd VII/3c (1979), Seite 203 ff.

Des weiteren ist aus der DE-A 28 17 890 ein Eintopfverfahren bekannt, ausgehend von 1-Aminoanthrachinon, das zunächst durch Bromieren in das 1-Amino-2,4-dibromanthrachinon überführt wird, das man ohne Zwischenisolieren in borsäurehaltiger Schwefelsäure zum 1-Amino-2-brom-4-hydroxyanthrachinon umsetzt. Das Verfahren ist einfach in der Durchführung und liefert das gewünschte Produkt in guter Ausbeute. Nachteil dieses Verfahrens ist jedoch, dass sich die während der Aufarbeitung anfallende verdünnte borsäurehaltige Schwefelsäure nicht ohne weiteres regenerieren lässt. Man erhält z.B. glasige Rückstände und ist vielfach gezwungen, die Abfallschwefelsäure zu neutralisieren, z.B. mittels Calciumcarbonat oder gelöschtem Kalk. Hinzukommt, dass das nach diesem Verfahren hergestellte 1-Amino-2-brom-4-hydroxyanthrachinon durch in 3-Stellung bromierte Verbindungen verunreinigt ist. Derartige Verunreinigungen führen bei der Farbstoffsynthese zu Nuancenverschiebungen, d.h. man erhält nicht typkonforme Farbstoffe.

Aufgabe der vorliegenden Erfindung ist es daher, ein Verfahren zur Herstellung von 1-Amino-2-brom-4-hydroxyanthrachinon zu entwickeln, das ein möglichst reines Produkt liefert und eine problemlose Regenerierung und damit Recyclierung der Schwefelsäure ermöglicht. Aus der EP-A-O 166 684 ist ein Verfahren zur Herstellung von Hydroxyaromaten durch Hydrolyse der entsprechenden halogenierten Aromaten mit Schwefelsäure in Gegenwart eines Aldehydes bekannt.

Gefunden wurde, dass die Hydrolyse des 1-Amino-2,4-dibromanthrachinons auch in Gegenwart eines Aldehyds, anstelle von Borsäure, bei gleich gutem Resultat durchgeführt werden kann. Der grosse Vorteil dieser Verfahrensweise besteht darin, dass die aldehydhaltige Schwefelsäure im Anschluss an die Aufarbeitung ohne Schwierigkeiten regeneriert werden kann. Es entsteht keine schwerzubeseitigende Abfallschwefelsäure. Zudem hat sich gezeigt, dass bei Durchführung dieses Verfahrens als Eintopfreaktion, ausgehend vom 1-Aminoanthrachinon, die Bildung überbromierter Nebenprodukte wirksam verhindert werden kann, wenn man überschüssiges Brom bzw. die im Reaktionsverlauf gebildete Bromwasserstoffsäure aus dem Reaktionsgemisch entfernt.

Gegenstand der vorliegenden Erfindung ist somit ein Verfahren zur Herstellung von 1-Amino-2-brom-4-hydroxyanthrachinon, wonach 1-Aminoanthrachinon unter Verwendung von Schwefelsäure als Reaktionsmedium zunächst in 2,4-Stellung bromiert und das Bromierungsprodukt ohne Zwischenisolierung anschliessend hydrolysiert wird; die kennzeichnenden Merkmale des neuen Verfahrens sind, dass man überschüssiges Brom und/oder die bei der Bromierung entstandene Bromwasserstoffsäure aus dem Reaktionsgemisch entfernt und die anschliessende Hydrolyse in Gegenwart eines Aldehyds durchführt.

Das als Ausgangsmaterial verwendete 1-Aminoanthrachinon ist seit langem bekannt und auf verschiedenen Wegen zugänglich, beispielsweise ausgehend von 1-Halogen- oder 1-Nitroanthrachinon und Austausch der Halogen- bzw. Nitrogruppe gegen die Aminogruppe oder Reduktion der Nitrogruppe zur Aminogruppe [siehe Ullmann, Encyklopädie der technischen Chemie, 4.Aufl. Bd. 7 (1974), Seite 590 ff].

Die Bromierung des 1-Aminoanthrachinons wird zweckmässigerweise in 80- bis 100gewichtsprozentiger Schwefelsäure, insbesondere 90- bis 98 gewichtsprozentiger Schwefelsäure durchgeführt. Die Dibromierung kann auch in Schwefelsäure geringerer Konzentration durchgeführt werden, vor der Hydrolyse sollte jedoch die Konzentration der Schwefelsäure auf über 90 Gew.-% angehoben werden, beispielsweise durch Zusatz von Oleum oder Einleiten von Schwefeltrioxid.

Bei der Bromierung sind Schwefelsäurekonzentrationen über 98 % zu vermeiden, da dies zu einer Verlangsamung der Reaktionsgeschwindigkeit führt und Nebenprodukte gebildet werden.

Was die Menge an Schwefelsäure anbetrifft, so wird diese zweckmässigerweise in der 3- bis 10-fachen Gewichtsmenge bezogen auf 1-Aminoanthrachinon verwendet; insbesondere verwendet man auf 1 Teil Aminoanthrachinon 4 bis 6 Teile konzentrierter Schwefelsäure.

Als Bromierungsmittel wird vorzugsweise Brom, Bromwasserstoff oder ein Alkalibromid eingesetzt; bevorzugt gelangt elementares Brom zur Anwendung. Das Brom wird vorzugsweise in einer Menge von 1 bis 3 Mol pro Mol 1-Aminoanthrachinon verwendet.

Die Reaktionstemperatur bei der Dibromierung wird in Abhängigkeit von der jeweiligen Schwefelsäurekonzentration des Reaktionsmediums eingestellt, da mit zunehmender Konzentration der Schwefelsäure bei niedrigeren Temperaturen bromiert werden kann. Es erweist sich als zweckmässig, die Bromierung bei einer Temperatur zwischen 50 und 120 °C durchzuführen. Arbeitet man in ca. 95 %iger Schwefelsäure, so werden gute Ergebnisse bei einer Reaktionstemperatur im Bereich von 100 °C erzielt.

Die Reaktionszeit hängt ab von der Schwefelsäurekonzentration und der Reaktionstemperatur; sie beträgt im allgemeinen 8 bis 15 Stunden. Die Bromierung kann in Gegenwart eines der üblichen Bromierungskatalysatoren durchgeführt werden, beispielsweise können dem Reaktionsgemisch kleine Mengen an Jod, Kaliumjodid oder Zinkchlorid zugesetzt werden. Ferner kann der Schwefelsäure ein organisches Lösungsmittel zugegeben werden, wie z.B. Essigsäure, Propionsäure oder Nitrobenzol. Derartige Zusätze erhöhen die Löslichkeit des Broms in der Schwefelsäure.

Wesentlich für das erfindungsgemässe Verfahren ist, dass nach Abschluss der Bromierung d.h. vor Durchführen der Hydrolyse gegebenenfalls vorhandenes überschüssiges Brom, sowie die während der Bromierung bzw. der Hydrolyse gebildete Bromwasserstoffsäure möglichst weitgehend aus dem Reaktionsgemisch entfernt werden. Durch diese Massnahme lässt sich die Bildung überbromierter Nebenprodukte praktisch vollständig verhindern. Zur Abtrennung des Broms bzw. Bromwasserstoffs erweist es sich als zweckmässig, das Reaktionsgemisch mit einem Inertgas, z.B. Stickstoff, zu durchspülen. Ferner kann das Brom bzw. die Bromwasserstoffsäure auch destillativ entfernt werden.

Anschliessend wird das Reaktionsgemisch der Hydrolyse unterworfen. Dazu wird zunächst die Schwefelsäurekonzentration, soweit erforderlich, auf Werte zwischen 95 und 100 Gew.% angehoben. Dann wird ein Aldehyd zugegeben und zwar vorteilhaft in einer Menge von 0,5 bis 3 Mol, insbesondere 0,5 bis 1,5 Mol, bezogen auf 1 Mol 1-Aminoanthrachinon.

Als Aldehyde können erfindungsgemäss sowohl aliphatische Aldehyde als auch aromatische Aldehyde eingesetzt werden. In erster Linie verwendet man aliphatische Aldehyde, die als Monomer eine Kettenlänge von 1 bis 4 Kohlenwasserstoffatomen aufweisen; insbesondere Formaldehyd oder formaldehydabgebende Mittel, wie z.B. Hexamethylentetramin oder Dimethyloläthylenharnstoff. Natürlich kann Formaldehyd auch in seiner polymeren Form als Paraformaldehyd verwendet werden.

Gute Ergebnisse werden auch mit Acetaldehyd erhalten, der ebenfalls in polymer Form, z.B. als Paraldehyd oder Metaldehyd eingesetzt werden kann. Geeignet sind ferner Propionaldehyd, n-Butyraldehyd und iso-Butyraldehyd.

Als aromatische Aldehyde kommen insbesondere Benzaldehyd und p-Chlorbenzaldehyd in Frage.

Durchgeführt wird die Hydrolyse vorteilhaft bei einer Temperatur von 80 ° bis 130 °C, insbesondere 100 ° bis 120 °C. Um die Bildung von Nebenprodukte weitgehend zu vermeiden erweist es sich als zweckmässig unter einer Inertgasatmosphäre zu arbeiten. Zu diesem Zweck leitet man z.B. ständig einen schwachen Stickstoffstrom durch den Reaktor. Nach einer Reaktionsdauer von 1 bis 10 Stunden ist die Hydrolyse im allgemeinen beendet. Man lässt das Reaktionsgemisch auf Raumtemperatur abkühlen und führt die Aufarbeitung nach einer der üblichen Methoden durch. Ueblicherweise verdünnt man das Reaktionsgemisch mit Wasser und fällt auf diese Weise das 1-Amino-2-brom-4-hydroxyanthrachinon weitgehend in kristalliner, leicht filtrierbarer Form aus. Anschliessend wird das Produkt durch die üblichen Trennmethoden, wie z.B. Filtration oder Zentrifugieren, von der verdünnten Schwefelsäure abgetrennt gegebenenfalls gewaschen und getrocknet. Die Schwefelsäure kann anschliessend wieder aufkonzentriert werden und steht für einen weiteren Ansatz zur Verfügung. 1-Amino-2-brom-4-hydroxyanthrachinon ist Ausgangsmaterial für zahlreiche Farbstoffe der unterschiedlichsten Farbstoffklassen, insbesondere für anthrachinoide Dispersionsfarbstoffe.

Die folgenden Beispiele dienen der Veranschaulichung der Erfindung; Teile (T) bedeuten Gewichtsteile und Prozente Gewichtsprozente.

Beispiel 1:

580 T 95 %ige Schwefelsäure und 0,5 T pulverisiertes Jod werden in einem Rührgefäss vorgelegt und unter Rühren bei Raumtemperatur 111,5 T 1-Aminoanthrachinon eingetragen.

Das Gemisch wird auf 100 °C erhitzt und während 12 Stunden werden bei gleicher Temperatur 120 T Brom zudosiert. Dann rührt man noch weitere 3 Stunden bei 100 °C. Hierauf wird das überschüssige Brom mittels Stickstoff ausgeblasen. Um den Bromgehalt zu überprüfen wird eine Probe entnommen. Bromgehalt: 41,4 % (Theorie 41,9 %).

Zur Hydrolyse wird das Reaktionsgemisch mit 195,3 T 66 %igem Oleum und 16 T Paraformaldehyd versetzt und auf 110 °C erhitzt. Das Gemisch wird so lange unter einem Stickstoffstrom auf 110 °C erhitzt, bis sich kein 1-Amino-2,4-dibromanthrachinon mehr nachweisen lässt. Die Reaktionszeit beträgt ca. 1-2 Stunden. Nach beendeter Umsetzung wird das Reaktionsgemisch auf Raumtemperatur abgekühlt und mit 523 T Wasser versetzt. Das 1-Amino-2-brom-4-hydroxyanthrachinon fällt in kristalliner Form aus, wird abfiltriert und mit Wasser neutral gewaschen. Man erhält 149 T Produkt, das entspricht einer Ausbeute von 93,7 %, berechnet auf 1-Aminoanthrachinon. Schmelzpunkt: 226-228 °C (Lit.: 231-232 °C); die Elementaranalyse ergibt einen Bromgehalt von 25,0 % (Berechnet: 25,2 %).

Beispiel 2:

580 T 93 %ige Schwefelsäure werden in einem Rührgefäss vorgelegt und unter Rühren bei Raumtemperatur 111,5 T 1-Aminoanthrachinon eingetragen. Das Gemisch wird auf 110 °C erhitzt und während 8 Stunden werden bei dieser Temperatur 145 T Brom zudosiert. Dann rührt man das Gemisch noch 1 Stunde bei 110 °C und beginnt anschliessend das überschüssige Brom mittels Destillation zu entfernen. Um die Bromierung zu überprüfen wird eine Probe entnommen. Der Gehalt an 1-Amino-2,4-dibromanthrachinon beträgt 96 %; der Bromgehalt 43,5 % (Theorie 41,9 %).

Zur Hydrolyse wird das Reaktionsgemisch auf Raumtemperatur abgekühlt, vorsichtig mit 273,3 T 66 %igem Oleum und 18,1 T Paraformaldehyd versetzt und auf 105 °C erhitzt. Man lässt so lange bei dieser Temperatur unter Stickstoff reagieren, bis sich kein 1-Amino-2,4-dibromanthrachinon mehr nachweisen lässt. Die Reaktionszeit beträgt ca. 1-2 Stunden. Nach beendeter Umsetzung wird das Reaktionsgemisch auf 60 °C abgekühlt und bei 60-65 °C mit 737 T Wasser versetzt. Das 1-Amino-2-brom-4-hydroxyanthrachinon fällt in kristalliner Form aus. Die erhaltene Suspension wird 1 Stunde bei 60-65 °C gerührt und das Produkt anschliessend bei 60 °C abfiltriert und mit Wasser neutral gewaschen. Man erhält 146,2 T Produkt mit einem Gehalt von 93,5 % an 1-Amino-2-brom-4-hydroxyanthrachinon, das entspricht einer Ausbeute von 92 % berechnet auf 1-Aminoanthrachinon. Schmelzpunkt 225-227 °C (Lit. 231-232 °C). Die Elementaranalyse ergibt einen Bromgehalt von 28,4 % (Berechnet 25,2 %). Aehnlich gute Ergebnisse werden erhalten, wenn man anstelle von Paraformaldehyd die gleiche Menge an Benzaldehyd oder 2-Chlorbenzaldehyd verwendet.

## Patentansprüche

1. Verfahren zur Herstellung von 1-Amino-2-brom-4-hydroxyanthrachinon durch Bromieren von 1-Aminoanthrachinon in 2- und 4-Stellung in konzentrierter Schwefelsäure und anschliessende Hydrolyse des 1-Amino-2,4-dibromanthrachinons, dadurch gekennzeichnet, dass man überschüssiges Brom und/oder die im Reaktionsverlauf entstehende Bromwasserstoffsäure aus dem Reaktionsgemisch entfernt und die Hydrolyse bei erhöhter Temperatur in Gegenwart eines Aldehyds durchführt.

2. Verfahren gemäss Anspruch 1, dadurch gekennzeichnet, dass man überschüssiges Brom und/oder Bromwasserstoffsäure mittels Durchleiten eines Inertgases, oder destillativ aus dem Reaktionsgemisch entfernt.

3. Verfahren gemäss Anspruch 1, dadurch gekennzeichnet, dass man die Hydrolyse bei einer Temperatur von 80 bis 130 °C durchführt.

4. Verfahren gemäss Anspruch 3, dadurch gekennzeichnet, dass man die Hydrolyse bei einer Temperatur von 100 bis 120 °C durchführt.

5. Verfahren gemäss Anspruch 1, dadurch gekennzeichnet, dass man als Aldehyd einen aliphatischen Aldehyd verwendet, der als Monomer eine Kettenlänge von $C_1$ bis $C_4$ aufweist.

6. Verfahren gemäss Anspruch 5, dadurch gekennzeichnet, dass man als Aldehyd Formaldehyd in monomerer oder polymerer Form oder ein formaldehydabgebendes Mittel verwendet.

7. Verfahren gemäss Anspruch 1, dadurch gekennzeichnet, dass man den Aldehyd in einer Menge von 0,5 bis 3 Mol bezogen auf 1 Mol 1-Aminoanthrachinon einsetzt.

8. Verfahren gemäss Anspruch 7, dadurch gekennzeichnet, dass man den Aldehyd in einer Menge von 0,5 bis 1,5 Mol bezogen auf 1 Mol 1-Aminoanthrachinon einsetzt

## Claims

1. A process for the preparation of 1-amino-2-bromo-4-hydroxyanthraquinone by brominating 1-aminoanthraquinone in the 2- and 4-position in concentrated sulfuric acid and subsequently hydrolysing the 1-amino-2,4-dibromoanthraquinone, which comprises removing excess bromine and/or hydrobromic acid formed during the reaction from the reaction mixture and carrying out the hydrolysis at elevated temperature in the presence of an aldehyde.

2. A process according to claim 1, which comprises removing excess bromine and/or hydrobromic acid from the reaction mixture by passing in an inert gas or by distillation.

3. A process according to claim 1, wherein the hydrolysis is carried out at a temperature from 80 - 130 °C.

4. A process according to claim 3, wherein the hydrolysis is carried out at a temperature from 100 - 120 °C.

5. A process according to claim 1, wherein the aldehyde used is an aliphatic aldehyde which, as monomer, contains 1 to 4 carbon atoms in the chain.

6. A process according to claim 5, wherein the aldehyde used is formaldehyde in monomer or polymer form or is a formaldehyde donor.

7. A process according to claim 1, wherein 0.5 to 3 moles of aldehyde are employed per mole of 1-aminoanthraquinone.

8. A process according to claim 7, wherein 0.5 to 1.5 moles of aldehyde are employed per mole of 1-aminoanthraquinone.

**Revendications**

1. Procédé de préparation de la 1-amino-2-bromo-4-hydroxyanthraquinone par bromation de la 1-aminoanthraquinone en positions 2 et 4, dans de l'acide sulfurique concentré, et hydrolyse ultérieure de la 1-amino-2,4-dibromoanthraquinone, **caractérisé** en ce qu'on élimine du mélange réactionnel le brome en excès et/ou l'acide bromhydrique formé au cours de la réaction et effectue l'hydrolyse à température élevée, en présence d'un aldéhyde.

2. Procédé selon la revendication 1, **caractérisé** en ce qu'on élimine du mélange réactionnel le brome en excès et/ou l'acide bromhydrique par passage d'un courant de gaz inerte ou par distillation.

3. Procédé selon la revendication 1, **caractérisé** en ce qu'on réalise l'hydrolyse à une température de 80 à 130 °C.

4. Procédé selon la revendication 3, **caractérisé** en ce qu'on réalise l'hydrolyse à une température de 100 à 120 °C.

5. Procédé selon la revendication 1, **caractérisé** en ce qu'on utilise comme aldéhyde un aldéhyde aliphatique qui présente, à l'état de monomère, une longueur de chaine de $C_1$ à $C_4$.

6. Procédé selon la revendication 5, **caractérisé** en ce qu'on utilise, comme aldéhyde, du formaldéhyde sous forme monomère ou polymère ou un agent produisant du formaldéhyde.

7. Procédé selon la revendication 1, **caractérisé** en ce qu'on utilise l'aldéhyde à raison de 0,5 à 3 moles pour 1 mole de 1-aminoanthraquinone.

8. Procédé selon la revendication 7, **caractérisé** en ce qu'on utilise l'aldéhyde à raison de 0,5 à 1,5 mole pour 1 mole de 1-aminoanthraquinone.